# EUROPEAN PATENT SPECIFICATION

(11) **EP 4 294 952 B1**
(45) Date of publication and mention of the grant of the patent: **11.12.2024**
(21) Application number: 22703094.7
(22) Date of filing: 09.02.2022
(51) Int. Cl.: C14C 3/08, C14C 9/00, C08L 89/06, C08H 1/06

(54) **A METHOD FOR TREATING LEATHER WASTE TO PRODUCE A FILLING COMPOSITION FOR TANNING USE**
VERFAHREN ZUR BEHANDLUNG VON LEDERABFALL ZUR HERSTELLUNG EINER FÜLLERZUSAMMENSETZUNG ZUM GERBEN
PROCÉDÉ DE TRAITEMENT DES DÉCHETS DE CUIR POUR OBTENIR UNE COMPOSITION DE REMPLISSAGE POUR LE TANNAGE

(30) Priority: 17.02.2021 IT 202100003683
(43) Date of publication of application: 27.12.2023
(73) Proprietor: I.C.A.I. S.P.A., 10090 Bruino (TO) (IT)
(72) Inventor: AGHEMO, Costanza, 10090 Bruino (TO) (IT); IANNARELLI, Luca, 10090 Bruino (TO) (IT)
(74) Representative: Buzzi, Notaro & Antonielli d'Oulx S.p.A.
(86) International application number: PCT/IB2022/051168
(87) International publication number: WO 2022/175788

(56) References cited:
- EP-A1- 3 109 288
- WO-A2-2020/230072
- US-A1- 2017 029 909
- DATABASE WPI Week 201974, Derwent World Patents Index; AN 2019-795440, XP002804211

## Description

### Field of the invention

The present description refers to a method for treating and recovery of leather wastes, even finished, derived from tanning applications to obtain a composition for tanning use comprising a protein hydrolyzate. The invention is set out in the appended set of claims.

### Background of the invention

Today, methods for treating and recovery of "unfinished" leather wastes are known. In addition to being easily subjected to chemical or enzymatic treatments for producing tanning compositions, unfinished leather wastes may be treated to produce regenerated leather or rather a material that can be subjected to dyeing, greasing and finishing steps similar to those performed on post-tanning leather.

The term "finishing" is defined in the ISO standard no. 15115:2019, (*International Organization for Standardization. (2019). Leather* - *Vocabulary (ISO Standard No. 15115: 2019*)) and falls within the definition of "mechanical and/or chemical operations performed on split leather to impart the required properties for the intended end use of the leather".

Unlike unfinished leather, therefore, "finished" leather is a post-tanning leather, dyed, greased and dried, treated on the surface in order to present the required product characteristics, such as, for example, gloss, elasticity, solidity, resistance to water.

The wastes or "scraps" of finished leather are, consequently, wastes derived from the processing of the finished leather and include scraps eliminated following the cutting of the leather that has already been subjected to the aforesaid processing and tanning steps.

Treating finished leather consequently presents critical issues in the potential recovery and recycling of the wastes. In particular, the wastes (or scraps) of finished leather are generally characterized by a wide inhomogeneity resulting from treatment with dyes and the type of application technique to which the leather has been subjected to meet aesthetic standards and commercial needs. Due to the operational complexity in the reuse of finished leather wastes, they are generally collected and eliminated. With a view to a circular economy, however, the recovery and reuse of leather scraps, especially finished, would allow an important added value to be given to a waste from processing that today needs to be disposed of as refuse. European patent application EP 3 109 288 A1, for example, describes a method for treating leather wastes and obtaining hydrolyzed collagen. Document WO2020/230072 A2 describes a method for treating tanned leather wastes; the composition obtained with the described method is a heterogeneous composition of hydrolyzed collagen, characterized by a liquid phase and a solid phase, and a pH between 12 and 13.5.

### Object and summary of the invention

In order to implement the re-use and enhancement of a resource generally classified as waste, the present description aims to provide a method for treating waste material of a protein nature, derived from processing and tanning wastes of the leather, which allows a composition for tanning use to be produced, which can be used for example as a filler.

According to the present description, this object is achieved thanks to a method having the characteristics forming the subject of the attached claims. The claims form an integral part of the disclosure provided here in relation to the described method.

The present description provides a method for treating and recovery of leather wastes to obtain a filling composition for tanning use comprising a protein hydrolyzate, the method comprising the steps of:
i) dissolving said leather wastes in a bath with a solution comprising an inorganic base and obtaining a solution comprising a protein hydrolyzate,
ii) adding to said solution comprising a protein hydrolyzate, an eutectic solvent comprising a halide and at least one organic hydrogen bond donor compound to obtain a composition comprising a protein hydrolyzate,
iii) adding at least one organic acid to said composition, and obtaining a filling composition comprising a protein hydrolyzate.

The composition obtained, comprising the protein hydrolyzate, is in the form of a fluid, stable and monophasic composition. The composition may have a pH value between 3.5 and 5.5.

### Detailed description

In the following description, numerous specific details are provided to allow a thorough understanding of embodiments. The embodiments can be put into practice without one or more of the specific details or with other methods, components or materials.

Reference throughout the present disclosure to "one embodiment" or "an embodiment" indicates that a particular aspect, structure or characteristic described with reference to the embodiment is included in at least one embodiment. Thus, forms of the expressions "in one embodiment" or "in an embodiment" at various points throughout the present description are not necessarily all referring to the same embodiment.

The expression "scraps or wastes of finished leather" means all processing wastes of the finished leather. These finished leather wastes may derive from any type of tanning, for example, wet blue, wet white and vegetable tannin. Unlike unfinished leather, "finished" leather - as also defined in the ISO standard no. 15115:2019 - is a post-tanning leather treated on the surface in order to present the required product characteristics, such as, for example, coloring, gloss, elasticity, solidity, touch, water resistance, etc. In particular, finished leather wastes are scraps of leather that may have been subjected to treatments that include pigments, paints, water repellents, resins, etc., which can be applied by spraying, with a roller machine, with a pad or veil machine, according to the size of the leather, the characteristics that the finished article must have and the type of mixture used.

Criticalities related to treating finished leather wastes derive from the characteristics of the treated leather following the finishing, as they can present considerable non-homogeneity in terms of coloring and surface treatments.

The Inventors of the present application have identified specific operating conditions of a method for treating and recovery of leather wastes derived from tanning, wherein the leather may be finished leather. In particular, the method allows a composition to be obtained, which can be used as a filler during tanning. The composition herein disclosed comprises a protein hydrolyzate, preferably hydrolyzed collagen. In one or more embodiments, the composition is a composition of (i.e. consists of) a protein hydrolyzate, preferably hydrolyzed collagen.

Compositions that can be used as a filler can be used to firm the parts of the leather which - subjected to the various tanning steps - have lost tone and are therefore called empty. These compositions, used for example on leather parts corresponding to the areas of the animal's neck or belly, firm up the material and facilitate the cutting steps.

The method subject of the present description is a method for treating and recovery of leather wastes derived from tanning to obtain a tanning composition comprising a protein hydrolyzate, comprising the steps of:
i) dissolving said leather wastes in a bath with a solution comprising an inorganic base and obtaining a solution comprising a protein hydrolyzate,
ii) adding to said solution comprising a protein hydrolyzate an eutectic solvent comprising a halide and at least one organic hydrogen bond donor compound to obtain a composition comprising a protein hydrolyzate,
iii) adding at least one organic acid to said composition, and obtaining a tanning composition comprising a protein hydrolyzate.

Leather wastes may derive from any type of tanning (wet blue, wet white, vegetable tannin); they can come in any shape and any color.

Advantageously, the method may be carried out not only on tanned but unfinished leather wastes, but also on tanned and finished leather wastes, mixtures thereof.

The inorganic base used in step i) may be selected in the group consisting of NH₃, NaOH, KOH, Ca(OH)₂, Mg(OH)₂, and Na₂CO₃. The solution may comprise the inorganic base in a concentration ranging from 1% to 30% (weight/weight).

Preferably, the weight ratio between the leather wastes and the solution comprising the inorganic base may be from 1:2 to 1:10 (weight/weight), preferably 1:4 (weight/weight).

The step i) of dissolving the leather wastes, optionally finished, may be carried out, preferably, by stirring the bath comprising the leather wastes and the solution comprising the inorganic base.

Preferably, step i) of dissolving the leather wastes in the bath with the solution comprising the inorganic base is carried out by slowly and gradually immersing the wastes, so as to facilitate their mixing and favor their dissolution to obtain the protein hydrolyzate.

Preferably during the dissolving step i) the solution comprising the inorganic base is heated and maintained at a temperature between 60°C and 90°C, for a time period between 1 hour and 12 hours.

The method comprises the step ii) wherein a eutectic solvent is added to the solution comprising the protein hydrolyzate obtained in step i), said eutectic solvent comprising, preferably consisting of, at least one halide and at least one organic compound donor of hydrogen bonds, obtaining a viscous composition.

In one or more embodiments, the eutectic solvent to be added to the solution comprising the hydrolyzed protein may be prepared by heating - preferably to a temperature of about 80°C - the halide and the organic hydrogen bond donor compound, until obtaining a clear and homogeneous compound.

The expression "eutectic solvent" refers to a class of binary compounds, commonly considered ionic liquids and with unique chemical-physical characteristics; their compositions, in certain molar ratios, cause a considerable lowering of the melting point of the mixture - if compared to the melting points of the pure components - allowing a variety of uses in the chemical field.

These compounds are generally obtained by complexing a quaternary organic base and a hydrogen bond donor. The use of eutectic solvents may represent a "green" alternative to ionic liquids and finds application in various sectors, such as metal processing, synthesis, producing biofuels and transforming complex organic matrices (Emma L. Smith et al., Chem. Rev., 2014, 114, 11060-11082). Eutectic solvents have been used in some steps of leather processing, for example, in the tanning step, as described, for example, in document US 2017/0029909 A1.

Preferably, the halide contained in the eutectic solvent of the present description may be present in the form of a quaternary ammonium salt, preferably choline chloride. The halide contained in the eutectic solvent may also be a metal halide, preferably zinc chloride (ZnCl₂), aluminum chloride (AlCl₃), mixtures thereof.

The organic hydrogen bond donor compound may be selected in the group consisting of citric acid, urea, glycerin, oxalic acid.

The eutectic solvent may comprise, for example, choline chloride, preferably in a concentration ranging from 25% to 60% (weight/weight) and the organic compound in a concentration ranging from 40% to 75% (weight/weight).

Given their molecular structure and their ability to interact with the hydrogen bonds of the collagen, eutectic solvents may facilitate the diffusion into the leather of the chemical auxiliaries used. Furthermore, the use of the eutectic solvent allows stabilization of the protein hydrolyzate of the composition.

Preferably, the composition obtained in step ii) is heated to a constant temperature between 60°C and 180°C, preferably for a time period between 1 hour and 16 hours.

The method may further comprise a step wherein the heated composition obtained in step ii) is cooled to a temperature between 20°C and 25°C.

The method comprises a step iii) wherein at least one organic acid is added to the composition obtained in step ii) in order to obtain the filling composition comprising a protein hydrolyzate.

In step iii), water is also added to the composition obtained in step ii) together with the organic acid.

The organic acid may be selected from the group consisting of formic acid, acetic acid, adipic acid, lactic acid, citric acid, mixtures thereof. Preferably, the composition obtained may have a pH value between 3.5 and 5.5.

The composition obtained may be diluted, for example, by adding water in an amount ranging from 400 to 50% by weight of the composition.

The described method has the advantage of being able to treat wastes of leather, even finished, and to obtain a composition comprising a protein hydrolyzate for convenient use, for example, as a filler, in tanning applications.

The filling composition obtained, comprising the protein hydrolyzate, is in the form of a fluid, stable and monophasic composition; the pH value of the composition may be between 3.5 and 5.5.

The physical state of the protein hydrolyzate allows easy and practical use without further manipulation or waste. The pH value of the composition obtained with the described method allows its use in the retanning bath without the risk of altering the structure of the tanned collagen.

In particular, the method allows recovery of wastes deriving from the processing and tanning of leather and - at the same time - obtaining a filling composition for treating the leather. Leather wastes may derive from any type of tanning (wet blue, wet white, vegetable tannin), and can come in any shape and any color.

The following example relates to a method of treating tanned and finished leather wastes; the same operating conditions may be used when the method involves treating tanned and unfinished leather wastes.

### EXAMPLES

In a 2000 ml beaker, 100 g of suitably chopped scraps of finished leather tanned with synthetic tannin are gradually dissolved in 400 g of an aqueous solution of 30% KOH (weight/weight) (step i). The solution thus obtained is stirred for a time equal to 2 hours and heated to a temperature equal to 75°C.

A eutectic solvent is prepared in a second 500 ml beaker by heating approximately 161 g of choline chloride and approximately 139 g of urea to a temperature of 80°C, until a clear and homogeneous compound is obtained. Subsequently, the eutectic solvent is added to the compound of step i) and stirred at a temperature equal to 65°C for a time equal to 16 hours (step ii).

Subsequently, the product of step ii) is cooled until it reaches a temperature equal to 25°C. Finally, 500 g of water is added to the compound of step ii) and is acidified with 150 g of 85% acetic acid (weight/weight), or in any case until a pH value equal to 4 is obtained (step iii).

## Claims

1. Method for treating leather wastes to obtain a composition for tanning use comprising a protein hydrolyzate, the method comprising the steps of:
i) dissolving said leather wastes in a bath with a solution comprising an inorganic base and obtaining a solution comprising a protein hydrolyzate,
ii) adding to said solution comprising a protein hydrolyzate an eutectic solvent comprising at least one halide and at least one organic hydrogen bond donor compound to obtain a composition comprising a protein hydrolyzate,
iii) adding at least one organic acid to said composition and obtaining a composition for tanning use comprising a protein hydrolyzate.

2. Method according to claim 1, wherein the leather wastes are selected from tanned leather wastes, tanned and finished leather wastes, mixtures thereof.

3. Method according to claim 1 or claim 2, wherein the inorganic base used in said step i) is selected in the group consisting of ammonia (NH₃), sodium hydroxide (NaOH), potassium hydroxide (KOH), calcium hydroxide (Ca(OH)₂), magnesium hydroxide (Mg(OH)₂), sodium carbonate (Na₂CO₃).

4. Method according to any one of the preceding claims, wherein the inorganic base is present in the solution in a concentration ranging from 1% to 30% (weight/weight).

5. Method according to any one of the preceding claims, wherein the weight ratio between the leather wastes and the solution comprising the inorganic base is between 1:2 and 1:10 (weight/weight).

6. Method according to any one of the preceding claims, wherein step i) is carried out by stirring the bath comprising the leather wastes and the solution comprising the inorganic base.

7. Method according to any one of the preceding claims, wherein during step i) the solution comprising the inorganic base is heated and maintained at a temperature between 60°C and 90°C, preferably for a time period between 1 hour and 12 hours.

8. Method according to any one of the preceding claims, wherein the halide contained in the eutectic solvent is present in the form of a quaternary ammonium salt, preferably choline chloride, or metal halide, preferably zinc chloride (ZnCl₂), aluminum chloride (AlCl₃), mixtures thereof.

9. Method according to any one of the preceding claims, wherein the organic hydrogen bond donor compound contained in the eutectic solvent is selected in the group consisting of citric acid, urea, glycerin, oxalic acid, mixtures thereof.

10. Method according to any preceding claim, wherein the composition obtained in step ii) is heated to a constant temperature between 60°C and 180°C, preferably for a time period between 1 hour and 16 hours.

11. Method according to claim 10, the method comprising a cooling step of the heated composition obtained in step ii) at a temperature between 20°C and 25°C.

12. Method according to any preceding claim, wherein the organic acid used in step iii) is selected in the group consisting of formic acid, acetic acid, adipic acid, lactic acid, citric acid, mixtures thereof.

13. Composition for tanning use comprising a protein hydrolyzate obtainable with a method according to any one of claims 1 to 12.

14. Composition according to claim 13, wherein the pH is comprised between 3.5 and 5.5.

15. Composition according to claim 13 or claim 14, wherein the composition is a monophasic composition.

## Patentansprüche

1. Verfahren zur Behandlung von Lederabfällen, um eine Zusammensetzung zur Verwendung beim Gerben zu erhalten, die ein Proteinhydrolysat enthält, wobei das Verfahren die folgenden Schritte umfasst:
i) Auflösen der Lederabfälle in einem Bad mit einer Lösung, die eine anorganische Base enthält, und Gewinnen einer Lösung, die ein Proteinhydrolysat enthält,
ii) Zugabe eines eutektischen Lösungsmittels, das mindestens ein Halogenid und mindestens eine organische Wasserstoffbrückenbindungs-Donorverbindung enthält, zu der ein Proteinhydrolysat enthaltenden Lösung, um eine Zusammensetzung zu erhalten, die ein Proteinhydrolysat enthält,
iii) Zugabe mindestens einer organischen Säure zu dieser Zusammensetzung und Erhalt einer Zusammensetzung zur Verwendung als Gerbstoff, die ein Proteinhydrolysat enthält.

2. Verfahren nach Anspruch 1, wobei die Lederabfälle ausgewählt werden aus gegerbten Lederabfällen, gegerbten und zugerichteten Lederabfällen und Mischungen davon.

3. Verfahren nach Anspruch 1 oder Anspruch 2, wobei die in Schritt i) verwendete anorganische Base ausgewählt ist aus der Gruppe bestehend aus Ammoniak (NH₃ ), Natriumhydroxid (NaOH), Kaliumhydroxid (KOH), Calciumhydroxid (Ca(OH)₂ ), Magnesiumhydroxid (Mg(OH)₂ ), Natriumcarbonat (Na₂CO₃).

4. Verfahren nach einem der vorhergehenden Ansprüche, wobei die anorganische Base in der Lösung in einer Konzentration von 1 % bis 30 % (Gewicht/Gewicht) vorhanden ist.

5. Verfahren nach einem der vorhergehenden Ansprüche, wobei das Gewichtsverhältnis zwischen den Lederabfällen und der Lösung, die die anorganische Base enthält, zwischen 1:2 und 1:10 (Gewicht/Gewicht) liegt.

6. Verfahren nach einem der vorhergehenden Ansprüche, wobei Schritt i) durch Rühren des Bades mit den Lederabfällen und der Lösung mit der anorganischen Base durchgeführt wird.

7. Verfahren nach einem der vorhergehenden Ansprüche, wobei in Schritt i) die Lösung, die die anorganische Base enthält, erhitzt und auf einer Temperatur zwischen 60°C und 90°C, vorzugsweise für eine Zeitspanne zwischen 1 Stunde und 12 Stunden, gehalten wird.

8. Verfahren nach einem der vorhergehenden Ansprüche, **dadurch gekennzeichnet, dass** das im eutektischen Lösungsmittel enthaltene Halogenid in Form eines quaternären Ammoniumsalzes, vorzugsweise Cholinchlorid, oder eines Metallhalogenids, vorzugsweise Zinkchlorid (ZnCl₂), Aluminiumchlorid (AlCl₃), Mischungen davon, vorliegt.

9. Verfahren nach einem der vorhergehenden Ansprüche, wobei die in dem eutektischen Lösungsmittel enthaltene organische Wasserstoffbrückenbindungs-Donorverbindung ausgewählt ist aus der Gruppe bestehend aus Zitronensäure, Harnstoff, Glycerin, Oxalsäure und Mischungen davon.

10. Verfahren nach einem der vorhergehenden Ansprüche, wobei die in Schritt ii) erhaltene Zusammensetzung auf eine konstante Temperatur zwischen 60°C und 180°C, vorzugsweise für eine Zeitspanne zwischen 1 Stunde und 16 Stunden, erhitzt wird.

11. Verfahren nach Anspruch 10, wobei das Verfahren einen Schritt des Abkühlens der in Schritt ii) erhaltenen erhitzten Zusammensetzung bei einer Temperatur zwischen 20°C und 25°C umfasst.

12. Verfahren nach einem der vorhergehenden Ansprüche, wobei die in Schritt iii) verwendete organische Säure aus der Gruppe ausgewählt ist, die aus Ameisensäure, Essigsäure, Adipinsäure, Milchsäure, Zitronensäure und Mischungen davon besteht.

13. Zusammensetzung zur Verwendung als Bräunungsmittel, die ein Proteinhydrolysat enthält, das mit einem Verfahren nach einem der Ansprüche 1 bis 12 erhältlich ist.

14. Zusammensetzung nach Anspruch 13, wobei der pH-Wert zwischen 3,5 und 5,5 liegt.

15. Zusammensetzung nach Anspruch 13 oder Anspruch 14, wobei die Zusammensetzung eine einphasige Zusammensetzung ist.

## Revendications

1. Procédé pour traiter des déchets de cuir pour obtenir une composition à utiliser en tannage, comprenant un hydrolysat de protéines, le procédé comprenant les étapes de :
i) dissolution desdits déchets de cuir dans un bain avec une solution comprenant une base inorganique, et obtention d'une solution comprenant un hydrolysat de protéines,
ii) addition, à ladite solution comprenant un hydrolysat de protéines, d'un solvant eutectique comprenant au moins un halogénure et au moins un composé donneur de liaison hydrogène organique pour que soit obtenue une composition comprenant un hydrolysat de protéines,
iii) addition d'au moins un acide organique à ladite composition et obtention d'une composition à utiliser en tannage comprenant un hydrolysat de protéines.

2. Procédé selon la revendication 1, dans lequel les déchets de cuir sont choisis parmi les déchets de cuir tanné, les déchets de cuir tanné et fini, leurs mélanges.

3. Procédé selon la revendication 1 ou la revendication 2, dans lequel la base inorganique utilisée dans l'étape i) est choisie dans le groupe constitué par l'ammoniac (NH₃), l'hydroxyde de sodium (NaOH), l'hydroxyde de potassium (KOH), l'hydroxyde de calcium (Ca(OH)₂), l'hydroxyde de magnésium (Mg(OH)₂), le carbonate de sodium (Na₂CO₃).

4. Procédé selon l'une quelconque des revendications précédentes, dans lequel la base inorganique est présente dans la solution à une concentration située dans la plage allant de 1 % à 30 % (poids/poids).

5. Procédé selon l'une quelconque des revendications précédentes, dans lequel le rapport en poids entre les déchets de cuir et la solution comprenant la base inorganique est compris entre 1/2 et 1/10 (poids/poids).

6. Procédé selon l'une quelconque des revendications précédentes, dans lequel l'étape i) est mise en oeuvre par agitation du bain comprenant les déchets de cuir et la solution comprenant la base inorganique.

7. Procédé selon l'une quelconque des revendications précédentes, dans lequel, durant l'étape i), la solution comprenant la base inorganique est chauffée et maintenue à une température comprise entre 60°C et 90°C, de préférence pendant une période de temps comprise entre 1 heure et 12 heures.

8. Procédé selon l'une quelconque des revendications précédentes, dans lequel l'halogénure contenu dans le solvant eutectique est présent sous la forme d'un sel d'ammonium quaternaire, de préférence le chlorure de choline, ou d'un halogénure métallique, de préférence le chlorure de zinc (ZnCl₂), le chlorure d'aluminium (AlCl₃), leurs mélanges.

9. Procédé selon l'une quelconque des revendications précédentes, dans lequel le composé donneur de liaison hydrogène organique contenu dans le solvant eutectique est choisi dans le groupe constitué par l'acide citrique, l'urée, le glycérol, l'acide oxalique, leurs mélanges.

10. Procédé selon l'une quelconque des revendications précédentes, dans lequel la composition obtenue dans l'étape ii) est chauffée à une température constante comprise entre 60°C et 180°C, de préférence pendant une période de temps comprise entre 1 heure et 16 heures.

11. Procédé selon la revendication 10, lequel procédé comprend une étape de refroidissement de la composition chauffée obtenue dans l'étape ii) à une température comprise entre 20°C et 25°C.

12. Procédé selon l'une quelconque des revendications précédentes, dans lequel l'acide organique utilisé dans l'étape iii) est choisi dans le groupe constitué par l'acide formique, l'acide acétique, l'acide adipique, l'acide lactique, l'acide citrique, leurs mélanges.

13. Composition à utiliser en tannage comprenant un hydrolysat de protéines pouvant être obtenu par un procédé selon l'une quelconque des revendications 1 à 12.

14. Composition selon la revendication 13, dans laquelle le pH est compris entre 3,5 et 5,5.

15. Composition selon la revendication 13 ou la revendication 14, laquelle composition est une composition monophasique.
